(19) Europäisches Patentamt / European Patent Office / Office européen des brevets

(11) **EP 2 194 422 B1**

(12) **FASCICULE DE BREVET EUROPEEN**

(45) Date de publication et mention
de la délivrance du brevet:
**13.11.2013 Bulletin 2013/46**

(51) Int Cl.:
***G02F 1/025*** *(2006.01)*

(21) Numéro de dépôt: **09177481.0**

(22) Date de dépôt: **30.11.2009**

(54) **Modulateur de porteuse optique par plasmons de surface, à base de matériaux semiconducteurs**

Modulator eines optischen Trägers durch Oberflächenplasmonen auf der Basis von Halbleitermaterialien

Optical carrier modulator by surface plasmons, based on semiconductor materials

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **02.12.2008 FR 0806766**

(43) Date de publication de la demande:
**09.06.2010 Bulletin 2010/23**

(73) Titulaires:
• **Thales**
  **92200 Neuilly Sur Seine (FR)**
• **UNIVERSITE DES SCIENCES ET TECHNOLOGIES DE LILLE**
  **F-59655 Villeneuve d'Ascq Cedex (FR)**
• **Université Paris 6 Pierre et Marie Curie UPMC**
  **75005 Paris (FR)**

(72) Inventeurs:
• **Huignard, Jean-Pierre**
  **75013 Paris (FR)**
• **Tripon-Canseliet, Charlotte**
  **94117 Arcueil Cedex (FR)**
• **Loiseaux, Brigitte**
  **91440 Bures Sur Yvette (FR)**
• **Dogheche, El Hadj**
  **59131 Rousies (FR)**
• **Magnin, Vincent**
  **94117 Arcueil Cedex (FR)**
• **Dolfi, Daniel**
  **91400 Orsay (FR)**
• **Decoster, Didier**
  **59100 Roubaix (FR)**
• **Chazelas, Jean**
  **75015 Paris (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A-99/49353          US-A- 5 155 617
US-A1- 2003 206 708

**Description**

Le domaine de l'invention est celui des dispositifs de modulation de la lumière ultra-rapides et intégrés pouvant notamment être utilisés pour la réalisation de transmissions optiques des signaux analogiques micro-ondes et/ou les signaux numériques à très haut débit.

Ces dispositifs peuvent également être utilisés afin de réaliser des fonctions élémentaires telles que des mélangeurs micro-ondes, des interrupteurs et des échantillonneurs à commande optique. Pour que de tels dispositifs soient réellement intéressants, il est nécessaire d'optimiser leurs performances ainsi que celles des transmissions optiques associées, et une possibilité d'intégration accrue.

L'état de l'art de différentes familles de modulateurs existant ainsi que leurs principales caractéristiques est résumé ci-après.

Les modulateurs de la famille électro-optique niobate effectuent un type de modulation en amplitude et en phase. Ils permettent une intégration sur une large bande de fréquences mais ont notamment comme inconvénients de nécessiter une longueur d'interaction importante et de présenter des réponses non linéaires.

Les modulateurs de la famille électro-optique polymère effectuent un type de modulation en amplitude et en phase. Ils ont comme avantage d'utiliser des matériaux diélectriques à faible constante diélectrique, donc à faibles pertes et de pouvoir fonctionner sur une très large bande de fréquences mais ils présentent des problèmes au niveau de la stabilité du matériau et de la polarisation.

Les modulateurs de la famille acousto-optique exécutent une modulation en amplitude et en fréquence. Ils ont comme avantage d'être robustes mais ont notamment comme inconvénient de fonctionner dans une bande de fréquences limitée.

Enfin les modulateurs fonctionnant par électro-absorption effectuent une modulation en amplitude. Ils présentent une bonne intégration mais ont une sélectivité spectrale médiocre et leurs caractéristiques de fonctionnement dépendent de la température.

Les techniques de modulation optique ont fait l'objet de nombreux travaux en laboratoire et un certain nombre de ces travaux ont conduit au développement de produits commerciaux présentant des performances bien établies. Les dispositifs réalisés visent pour la plupart à réduire la tension de commande et à augmenter leur bande passante. Dans ce cadre, les applications dans les télécommunications ont permis le développement de composants présentant des caractéristiques bien établies.

Dans le domaine de l'opto-hyperfréquence qui adresse des signaux analogiques à très large bande sur porteuse optique, ces technologies rencontrent un certain nombre de limitations majeures, notamment en ce qui concerne :

- la tension de commande ;
- la linéarité par rapport à la profondeur de modulation ;
- la dynamique, diminution des pertes d'insertions et du facteur de bruit ;
- la bande passante de modulation.

Un but de l'invention est notamment de pallier les inconvénients précités en proposant un modulateur présentant à la fois un encombrement réduit et une meilleure fonction de transfert par rapport aux dispositifs connus.

A cet effet, l'invention a pour objet un modulateur de porteuse optique par plasmons de surface, utilisant une technologie intégrée à base de matériaux semiconducteurs **caractérisé en ce qu'**il comporte :

- un ensemble de couches semiconductrices comportant une structure guidante pour une onde optique incidente introduite dans ladite structure guidante, ladite structure guidante assurant un confinement asymétrique de ladite onde optique;
- une couche métallique dit supérieur à contact Schottky destinée à recevoir notamment une onde optique permettant la génération d'une onde plasmonique de surface au niveau de l'interface métal/semiconducteur.
  Le signal électrique de commande appliqué au niveau de ce contact modifie l'indice des couches semiconductrices perturbant la propagation de l'onde plasmonique générée.
- des moyens pour moduler l'indice optique au niveau du contact électrique de type Schottky de manière à créer une modulation de l'onde optique réfléchie au niveau de ladite interface.

Selon une variante de l'invention, l'interface nécessaire à la génération de l'onde plasmonique comporte au moins une couche métallique et une couche semiconductrice, les moyens pour moduler l'indice optique du par contact de type Schottky opérant sur ladite couche semiconductrice.

Selon une variante de l'invention, la structure guidante comporte une première structure de confinement optique dite inférieure, un coeur dans lequel peut se propager une onde optique, une seconde structure de confinement optique dite supérieure, ladite seconde structure de confinement optique étant à gradient d'indice, permettant de conduire l'onde optique incidente au niveau de l'interface métal/semiconducteur.

Selon une variante de l'invention, la seconde structure de confinement comporte un empilement de couches semiconductrices permettant de réaliser le gradient d'indice.

Selon une variante de l'invention, l'ensemble de couches semiconductrices comportant une structure guidante pour une onde optique incidente comporte une alternance de couches à base de InP et de couches à base de matériau quaternaire de type GaInAsP..

Selon une variante de l'invention, l'ensemble de couches semiconductrices alternées d'indice optique différent comporte une structure guidante pour une onde optique incidente.

Selon une variante de l'invention, le modulateur de porteuse optique comporte un prisme réalisé avec un matériau à indice optique supérieur à celui du coeur de la structure guidante. Une telle variante est particulièrement adaptée, dans le cas où l'angle d'incidence nécessaire à la génération de plasmons au niveau de l'interface métal/semiconducteur est important.

D'autres caractéristiques et avantages de l'invention apparaîtront à la lecture de la description qui va suivre donnée à titre non limitatif et grâce aux figures annexées parmi lesquelles :

- la figure 1 illustre une polarisation en mode transverse TM d'une onde optique incidente se propageant dans un milieu diélectrique vers un milieu métallique utilisée dans un modulateur de l'invention et permettant la génération d'une onde plasmon de type évanescent, transmise à l'interface diélectrique/métal ;
- la figure 2 illustre l'évolution de la résonance plasmonique en fonction de l'angle d'incidence d'une onde optique sur une interface métal/diélectrique avec et sans l'action d'une excitation RF ;
- les figures 3a et 3b illustrent un exemple de modulateur selon l'invention dans lequel un empilement de couches semiconductrices est réalisé à la surface d'un substrat de type InP par épitaxie en accord de maille sur ledit substrat ;
- la figure 4 illustre la structure guidante comprenant un mesa de l'exemple de modulateur illustré en figures 3a et 3b ;
- la figure 5 illustre une variante de l'invention intégrant un prisme.

Le dispositif de la présente invention est un dispositif intégré de modulation ultra rapide de la lumière et plus particulièrement un dispositif présentant des zones d'interaction confinée ou hyper localisée par effet de génération de plasmons de surface au niveau d'une interface métal/ semiconducteur. La modulation de la lumière est obtenue par contrôle de l'amplitude de l'onde plasmonique à l'interface d'une structure comportant un empilement de couches contenant au moins un semiconducteur permettant le guidage de l'onde optique incidente, et un métal déposé à sa surface.

Il s'agit d'un modulateur plasmonique à semiconducteurs à guides d'ondes à ondes évanescentes, caractérisé par une courbure du mode optique accordé à l'angle de résonance plasmonique de la structure complète semiconducteur/métal pour la génération des plasmons à la surface de cette interface.

Le dispositif de la présente invention exploite le caractère semi-isolant d'un matériau semiconducteur afin de réaliser la génération de plasmons de surface au niveau d'une interface métal/semiconducteur. Le caractère conducteur du matériau semiconducteur permet de réaliser une variation d'indice de ce matériau par effet Schottky.

Les performances attendues de ce nouveau type de modulateur de porteuse optique par plasmons de surface permettent de réaliser une rupture technologique dans le domaine des transmissions de signaux analogiques hyperfréquences sur porteuse optique. En effet, ces dispositifs nécessitant une très faible tension de commande (de l'ordre du volt) et offrant de faibles pertes d'insertion (de l'ordre du dB) ainsi qu'une linéarité accrue ouvrent un vaste champ d'applications de liaisons opto-hyperfréquences dans des systèmes de télécommunications, type radio sur fibre mais aussi dans les domaines de la sécurité et de la défense où une forte dynamique associée à une immunité face aux interférences électromagnétiques des liaisons est nécessaire.

Compte tenu de l'accroissement des besoins en dynamique et en linéarité de ces systèmes, les performances (pertes d'insertion et facteur de bruit) des déports optiques de signaux hyperfréquence large bande doivent s'améliorer de plus de lods, la technologie plasmonique dans des structures métal-semiconducteur intégrées semble extrêmement prometteuse pour la réalisation de transmissions de signaux analogiques à très hautes fréquences présentant à la fois une très haute linéarité et un très faible facteur de bruit, tout en maintenant des critères de faible consommation et faible coût.

De manière générale, le modulateur selon l'invention utilise la génération de plasmons de surface pour transporter sur une porteuse optique des signaux électriques de modulation haute fréquence et effectuer la modulation de signaux électromagnétiques sur porteuse optique dans une structure intégrée semiconductrice à variation d'indice par effet Schottky.

La génération de plasmons dans un métal, ou oscillations d'électrons libres présents avec une densité $n$, peut être obtenue par une excitation extérieure optique à une pulsation spécifique correspondant à la résonance plasma $\omega_p$ définie par la relation suivante :

$$\omega_p = \sqrt{\frac{ne^2}{m\varepsilon_0}} \quad (1)$$

Dans le cas d'une interface entre un diélectrique et un métal, la génération de plasmons est localisée en surface (plasmons de surface) à une fréquence d'excitation $\omega_{sp}$ légèrement différente de $\omega_p$, du fait de la présence du diélectrique de permittivité $\varepsilon_d$ ou d'indice $n_d$.

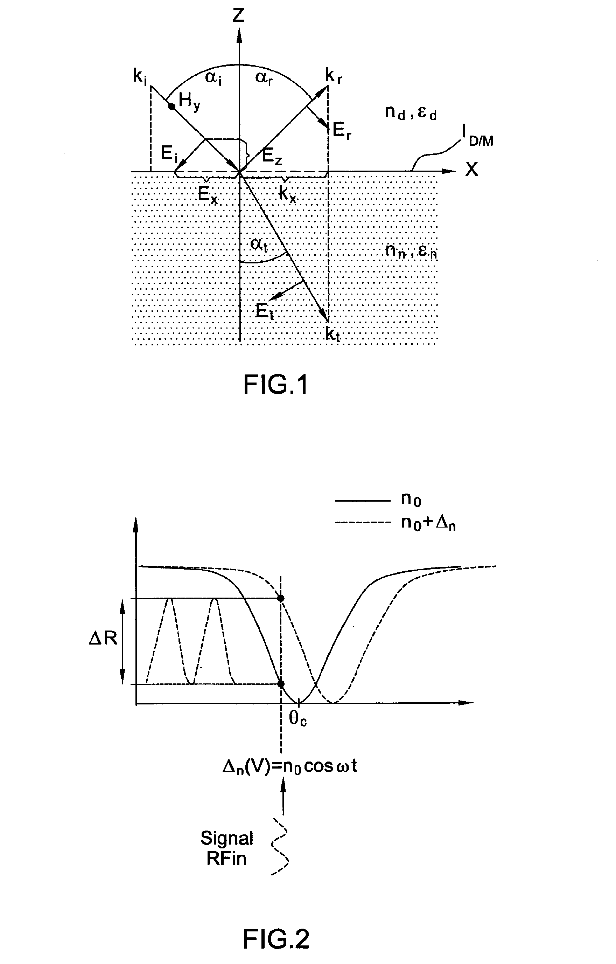

La figure 1 illustre une polarisation en mode transverse TM d'une onde optique incidente se propageant dans un milieu diélectrique d'indice optique $n_D$ et de constante diélectrique $\varepsilon_D$ vers un milieu métallique d'indice optique $n_M$ et de constante diélectrique $\varepsilon_M$. Une polarisation TM de l'onde optique incidente permet la génération d'une onde plasmon de type évanescent, transmise à l'interface diélectrique/métal $I_{D/M}$ correspondant à l'axe x et se propageant suivant cet axe dans le métal.

Les critères de continuité, au niveau de l'interface diélectrique/métal, des vecteurs $k_i$, $k_t$ de l'onde incidente et de l'onde plasma transmise doivent alors être respectés, ce qui se traduit par les relations (2) et (3) suivantes :

$$k_x^d = k_x^m \qquad (2)$$

où $k_x^d$ et $k_x^m$ représentent respectivement la composante selon l'axe x du vecteur $k_i$, côté du diélectrique, et la composante selon l'axe x du vecteur $k_t$, côté du métal.

$$\frac{k_x^d}{k_x^m} = -\frac{\varepsilon_d}{\varepsilon_m} \qquad (3)$$

$\varepsilon_d$ et $\varepsilon_m$ représentant respectivement les permittivités du diélectrique et du métal.

Ces relations conduisent à la relation de dispersion caractéristique de l'onde plasma générée suivante :

$$k_x = \frac{\omega_0}{c}\sqrt{\frac{\varepsilon_d \varepsilon_m}{\varepsilon_d + \varepsilon_m}} \qquad (4)$$

Afin de réaliser l'accord entre les modules des vecteurs d'onde de l'onde incidente (excitation optique) à la pulsation $\omega_0$, et de l'onde générée au niveau de l'interface (plasmon), il est nécessaire d'introduire une couche de matériau à fort indice optique entre le milieu diélectrique et le métal.

Comme l'illustre la figure 1, la génération de plasmons de surface est généralement établie par réflexion de l'onde optique sur une structure diélectrique/métal suivant un angle d'incidence $\theta_i$ correspondant à l'angle critique de réflexion totale $\theta_c$, défini par la relation suivante, en considérant l'indice $n_m$ du métal 30 et l'indice $n_d$ du milieu incident diélectrique :

$$\theta_c = \sin^{-1}\left(\frac{n_m}{n_d}\right) \qquad (5)$$

Dans ce cas, l'amplitude de l'onde réfléchie devenant nulle, l'onde incidente est alors complètement absorbée par les plasmons de surface générés.

Ainsi dans le modulateur de l'invention, on obtient une modulation en amplitude et/ou en phase de l'onde réfléchie réalisée, au voisinage de l'angle d'incidence critique correspondant à une absorption plasmonique, par variation de l'indice du milieu diélectrique sous l'action d'une faible tension appliquée permettant un désaccord partiel ou total de l'angle d'attaque de l'onde optique incidente au niveau de l'interface considérée.

La figure 2 illustre à ce titre l'évolution de la résonance plasmonique avec et sans excitation RF et ce en fonction de l'angle d'incidence d'une onde optique à l'interface métal/diélectrique. Le décalage entre la courbe en traits pleins et celle en traits pointillés montre la modulation de l'amplitude de l'onde optique réfléchie sur l'interface pour une incidence donnée, lorsque l'on fait varier l'indice du matériau diélectrique sous l'effet d'une excitation RF. La différence de réflectivité $\Delta R$ est représentative de la modulation qui peut être obtenue par variation d'indice optique.

De manière générale, l'interaction plasmon est très localisée sur une longueur inférieure à une centaine de microns, elle permet d'envisager un fonctionnement à très haute fréquence du dispositif : dans ces conditions le désaccord de phase existant entre l'onde optique et l'onde hyperfréquence n'est plus un facteur limitant.

D'autre part, l'indice effectif global de l'empilement de couches semiconductrices de l'invention permet de réaliser l'accord des vecteurs de l'onde optique incidente et de l'onde plasmonique nécessaire.

Par ailleurs, l'effet de résonance permet d'obtenir une modulation analogique à partir d'une variation d'indice beaucoup plus faible que celle nécessaire aux dispositifs interférométriques électro-optiques classiques.

La faible tension de commande de ces nouveaux dispositifs plasmoniques permet d'éviter l'utilisation de matériaux à fort coefficient électro-optique pour lesquels la synthèse et la technologie restent encore délicates.

La faible tension de commande de ces nouveaux dispositifs plasmoniques permet également de s'affranchir de l'utilisation de dispositifs de commande électronique de forte puissance donc coûteux.

Enfin, cette interaction étant d'origine physique, elle offre l'avantage de ne présenter aucune limitation en bande passante.

En outre, un avantage supplémentaire du dispositif intégré vient du fait que le guide d'ondes fournit une onde TM au niveau de la zone d'excitation des plasmons et est donc favorable à une optimisation des performances du dispositif.

L'invention permet avantageusement un confinement étroit de la lumière dans la zone d'interaction, zone où la variation d'indice est également effectuée. La puissance de l'onde optique transmise dans le guide optique intégré de sortie, obtenue par réflexion de l'onde optique incidente focalisée au niveau de l'interface est modulée suivant la tension de la commande électrique appliquée. Ceci améliore les performances globales du dispositif selon l'invention par rapport aux dispositifs existants.

Grâce à l'utilisation de technologies de type guide d'onde optique le dispositif selon l'invention peut en outre avantageusement présenter des dimensions très faibles, inférieures au mm.

Exemples de réalisation :

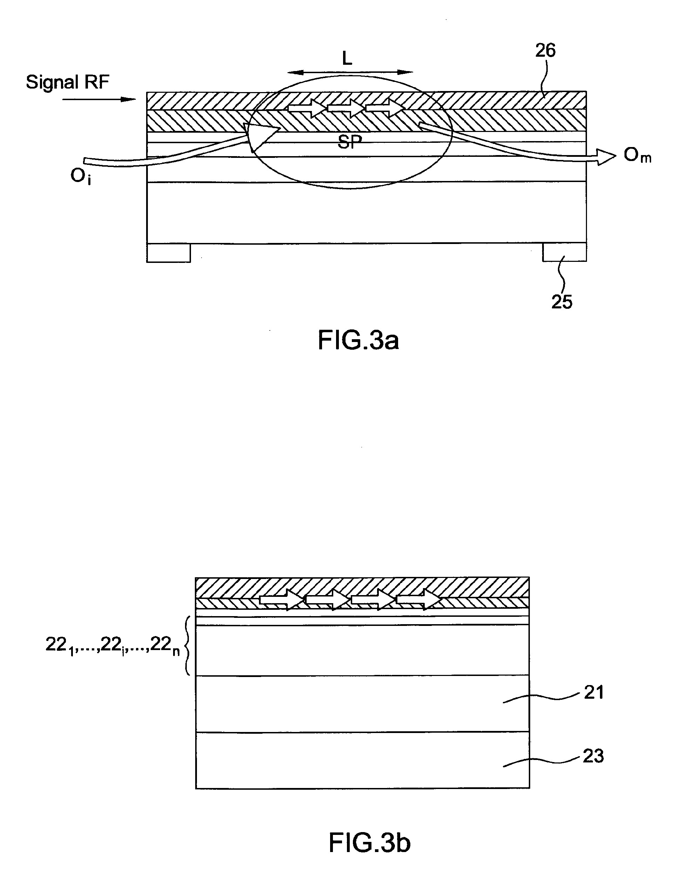

La figure 3a illustre un exemple de modulateur selon l'invention dans lequel un empilement de couches est réalisé à la surface d'un substrat semiconducteur de la famille III-V par épitaxie en accord de maille sur le substrat, la figure 3b étant une vue agrandie du coeur de la structure guidante insérée entre deux séries de couches de confinement optique.

L'ensemble des couches 21, 22 et 23 forment un guide multimode dilué qui est constitué de fines couches de matériau quaternaire séparées par des couches de matériau semiconducteur équivalent à celui du substrat choisi d'épaisseur variable, formant l'équivalent d'une structure à gradient d'indice entre le bas et le haut du guide. La couche 21 est le coeur de la structure guidante comportant de part et d'autres du guide des couches de confinement optique. Une onde optique incidente Oi peut être introduite au niveau du coeur en optique guidée. Le coeur de la structure guidante est inséré entre une couche de confinement inférieur 23 et un ensemble de couches $22_1$, ..., $22_i$, ..., $22_n$ assurant la fonction de confinement supérieur asymétrique grâce à un profil d'indice réalisé au sein de ces couches. Cette onde optique incidente peut ainsi être dirigée en direction du contact de type Schottky 26 dans lequel est introduit par ailleurs un signal RF. Au delà de la longueur d'interaction, on récupère une onde optique réfléchie modulée Om.

La tension de commande est établie grâce également à des contacts ohmiques en face arrière 25.

La couche 23 constitue une couche de confinement inférieur de matériau semiconducteur de la famille III-V d'indice de réfraction inférieur à celui de la couche 21.

L'empilement $22_1$, ..., $22_i$, ..., $22_n$ assure la fonction de confinement supérieur à gradient d'indice permettant de générer le profil d'indice recherché de manière à permettre la propagation d'une onde optique se propageant dans le coeur du guide vers le contact Schottky et à créer le couplage nécessaire à la création d'ondes plasmon. A la surface de cet empilement de couches constitutif du confinement supérieur est réalisé le contact de type Schottky. Par exemple, dans le cas d'une onde optique à une longueur d'onde de 1.18 $\mu$m, cet empilement peut être réalisé par une superposition de couches GaInAsP d'épaisseur 90 nm alternées avec des couches d'InP d'épaisseurs 1.34 $\mu$m-0.51$\mu$m-1.2$\mu$m-0.1$\mu$m-1.1$\mu$m-0.02$\mu$m-0.05$\mu$m-0.06$\mu$m.

Dans ce cas, une couche supérieure 27 d'AlInAs permet d'améliorer la qualité du contact Schottky et la dernière couche de GaInAs sert de couche de protection de la couche d'AlInAs contre l'oxydation.

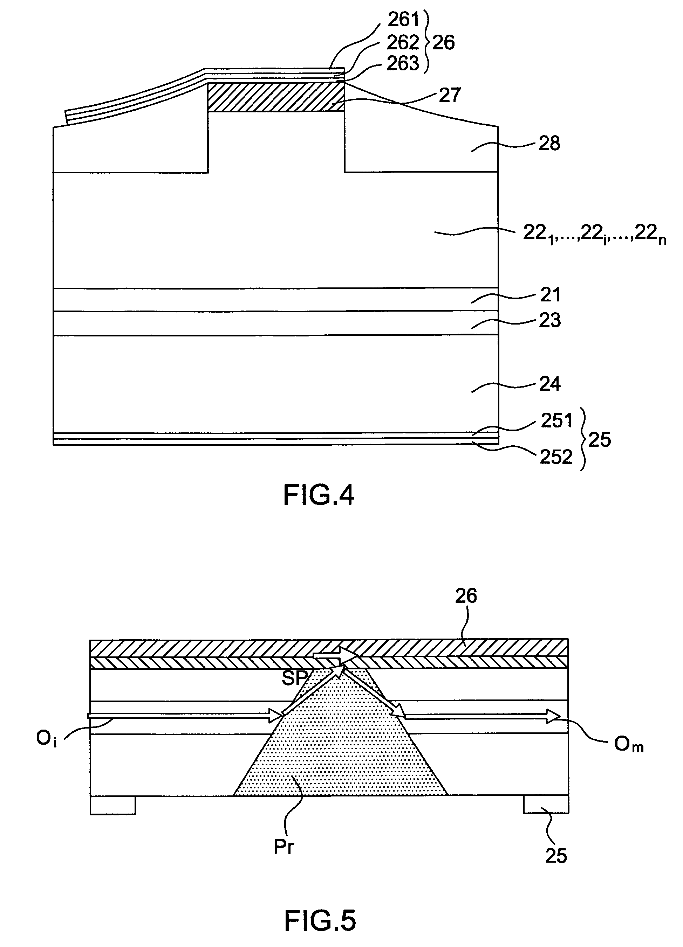

Par l'utilisation de techniques conventionnelle de photolithographie et de gravure RIE, des guides de 5 $\mu$m de large et de 1 $\mu$m d'épaisseur peuvent être réalisés comme illustré en figure 4.

Après retrait de la couche de protection, un contact Schottky 26 est réalisé sur le guide d'onde. Ce contact, formant électrode, est par exemple composé de trois couches :

- une couche supérieure 261 conductrice ;
- une couche intermédiaire 262 formant hauteur de barrière ;
- une couche inférieure 263 formant une couche d'accrochage.

Le modulateur de l'invention comprend par ailleurs un contact ohmique en face arrière 25 du substrat permettant d'assurer le retour à la masse de la tension de commande de manière à faire varier l'indice des couches semiconductrices.

Une résine 28 permet par exemple de recouvrir la couche 22n supérieure. Cette résine isolante permet notamment de prolonger l'électrode supérieure 26 vers une commande électrique non représentée, l'électrode se prolongeant sur la résine 28. La couche métallique inférieure 25 étant reliée à un potentiel fixe de référence, par exemple le potentiel de masse, l'électrode supérieure 26 est reliée à un signal de commande en tension.

Ce signal de commande fait varier la différence de potentiel entre les deux électrodes 26, 25 entraînant la variation d'indice nécessaire pour réaliser la variation de l'indice nécessaire à la modulation en amplitude et/ou en phase de l'onde réfléchie au niveau de l'interface métal/semiconducteur.

La figure 4 représente une vue dans un plan perpendiculaire à celui dans lesquelles sont représentées les figures 3a et 3b. Cette vue met en évidence une mesa réalisée en surface du modulateur de manière à confiner la structure guidante latéralement.

Il est à noter qu'un avantage important de l'invention réside notamment dans l'utilisation même d'un contact Schottky qui présente l'intérêt de ne pas accumuler de charges en raison de la rapidité de transfert.

Selon une autre variante de l'invention, le modulateur de l'invention peut comporter un prisme intégré à la structure modulateur en face arrière au niveau du substrat semiconducteur par le biais d'une technologie de gravure sèche ou par voie humide comme illustré en figure 5. La cavité obtenue représente le prisme intégré Pr sur lequel arrive l'onde optique incidente Oi permettant le couplage de l'onde optique avec l'onde plasmon par respect de la condition de phase, dépendante de la nature des matériaux choisis et la génération de l'onde optique modulée Om.

**Revendications**

1. Modulateur de porteuse optique par plasmons de surface, à base de matériaux semiconducteurs, comportant:

   - un ensemble de couches semiconductrices comportant une structure guidante (21,22,23) pour une onde optique incidente introduite dans ladite structure guidante, ladite structure guidante assurant un confinement asymétrique de ladite onde optique;
   - une couche métallique dite supérieure formant un contact de type Schottky (26) avec ledit ensemble de couches semiconductrices et destinée à recevoir notamment ladite onde optique guidée par ledit ensemble de couches semiconductrices de manière à permettre la génération d'une onde plasmonique de surface au niveau de l'interface métal/semiconducteur; et
   - des moyens aptes à moduler l'indice optique dudit ensemble de couches semiconductrices au niveau du contact électrique de type Schottky de manière à créer une modulation de l'onde optique réfléchie au niveau de ladite interface.

2. Modulateur de porteuse optique par plasmons de surface selon la revendication 1, **caractérisé en ce que** le contact de type Schottky comporte au moins une couche métallique et une couche semiconductrice, les moyens aptes à moduler l'indice optique de cette dernière étant dû au contact de type Schottky.

3. Modulateur de porteuse optique par plasmons de surface selon l'une des revendications 1 ou 2, **caractérisé en ce que** la structure guidante comporte une première structure de confinement optique dite inférieure, un coeur dans lequel peut se propager une onde optique, et une seconde structure de confinement optique dite supérieure, ladite seconde structure de confinement optique étant à gradient d'indice et étant contiguë à l'interface métal/semiconducteur, permettant de conduire l'onde optique incidente au niveau de l'interface métal/semiconducteur.

4. Modulateur de porteuse optique par plasmons de surface selon la revendication 3, **caractérisé en ce que** la seconde structure de confinement comporte un empilement de couches semiconductrices permettant de réaliser le gradient d'indice.

5. Modulateur de porteuse optique par plasmons de surface selon la revendication 4, **caractérisé en ce qu'**il comprend un ensemble de couches ($22_1$, ..., $22_i$, ..., $22_n$) assurant la fonction de confinement supérieur asymétrique à gradient d'indice.

6. Modulateur de porteuse optique par plasmons de surface selon l'une des revendications 1 ou 2, **caractérisé en ce qu'**il comporte un prisme (Pr) réalisé avec un matériau à indice optique supérieur à celui du coeur de la structure guidante.

7. Modulateur de porteuse optique par plasmons de surface selon l'une des revendications 1 à 6, **caractérisé en ce que** l'ensemble de couches semiconductrices comportant une structure guidante pour une onde optique incidente comporte une alternance de couches à base de InP et de couches à base de matériau quaternaire de type GaInAsP.

8. Modulateur de porteuse optique par plasmons de surface selon l'une des revendications 1 à 7, **caractérisé en ce que** le contact de type Schottky entre la couche métallique et l'ensemble de couches semiconductrice est apte à permettre la variation d'indice optique à la fréquence d'un signal de modulation appliquable au niveau de ce contact.

9. Modulateur de porteuse optique par plasmons de surface selon l'une des revendications 1 à 8, **caractérisé en ce qu'**il comprend un contact ohmique en face dite arrière, correspondant à une face opposée à celle comportant le contact de type Schottky, permettant une mise à la masse de la structure complète.

**Patentansprüche**

1. Modulator für einen optischen Träger durch Oberflächenplasmonen auf der Basis von Halbleitermaterialien, der Folgendes umfasst:

   - einen Satz Halbleiterschichten, die eine Führungsstruktur (21, 22, 23) für eine in die Führungsstruktur geleitete einfallende optische Welle umfassen, wobei die Führungsstruktur einen asymmetrischen Einschluss der optischen Welle gewährleistet;
   - eine metallische Schicht, obere Schicht genannt, die einen Kontakt (26) des Schottky-Typs mit dem Satz von Halbleiterschichten bildet und zum Empfangen insbesondere dieser optischen Welle bestimmt ist, die so durch die Baugruppe von Halbleiterschichten geführt wird, dass eine plasmonische Oberflächenwelle an der Grenzfläche von Metall/Halbleiter erzeugt werden kann; und
   - Mittel zum Modulieren des optischen Index des Satzes von Halbleiterschichten am elektrischen Kontakt des Schottky-Typs, um eine Modulation der an der Grenzfläche reflektierten optischen Welle zu erzeugen.

**2.** Modulator eines optischen Trägers durch Oberflächenplasmonen nach Anspruch 1, **dadurch gekennzeichnet, dass** der Kontakt des Schottky-Typs wenigstens eine metallische Schicht und eine Halbleiterschicht umfasst, wobei die Mittel zum Modulieren des optischen Index der Letzteren vom Kontakt des Schottky-Typs abgeleitet sind.

**3.** Modulator eines optischen Trägers durch Oberflächenplasmonen nach Anspruch 1 oder 2, **dadurch gekennzeichnet, dass** die Führungsstruktur eine erste Struktur zum optischen Einschließen, untere Struktur genannt, in deren Kern sich eine optische Welle ausbreiten kann, und eine zweite Struktur zum optischen Einschließen, obere Struktur genannt, umfasst, wobei die zweite optische Einschlussstruktur einen Indexgradienten hat und an die Metall/Halbleiter-Grenzfläche angrenzt, so dass die einfallende optische Welle an der Metall/Halbleiter-Grenzfläche geleitet werden kann.

**4.** Modulator eines optischen Trägers durch Oberflächenplasmonen nach Anspruch 3, **dadurch gekennzeichnet, dass** die zweite Einschlussstruktur einen Stapel Halbleiterschichten umfasst, der die Realisierung des Indexgradienten zulässt.

**5.** Modulator eines optischen Trägers durch Oberflächenplasmonen nach Anspruch 4, **dadurch gekennzeichnet, dass** er einen Satz Schichten $(22_1, ..., 22_i, ..., 22_n)$ umfasst, die die obere asymmetrische Einschlussfunktion mit Indexgradient gewährleistet.

**6.** Modulator eines optischen Trägers durch Oberflächenplasmonen nach Anspruch 1 oder 2, **dadurch gekennzeichnet, dass** er ein Prisma (Pr) umfasst, das mit einem Material mit einem optischen Index realisiert ist, der höher ist als der des Inneren der Führungsstruktur.

**7.** Modulator eines optischen Trägers durch Oberflächenplasmonen nach einem der Ansprüche 1 bis 6, **dadurch gekennzeichnet, dass** der Satz Halbleiterschichten eine Führungsstruktur für eine einfallende optische Welle umfasst, die abwechselnde InP-Basisschichten und Schichten auf der Basis von quaternärem Material des Typs GaInAsP umfasst.

**8.** Modulator eines optischen Trägers durch Oberflächenplasmonen nach einem der Ansprüche 1 bis 7, **dadurch gekennzeichnet, dass** der Kontakt des Schottky-Typs zwischen der metallischen Schicht und dem Satz Halbleiterschichten die optische Indexvariation auf der Frequenz eines Modulationssignals zulassen kann, die an diesen Kontakt angelegt werden kann.

**9.** Modulator eines optischen Trägers durch Oberflächenplasmonen nach einem der Ansprüche 1 bis 8, **dadurch gekennzeichnet, dass** er einen ohmschen Kontakt auf einer hinteren Fläche umfasst, die einer Fläche entspricht, die der gegenüber liegt, die den Kontakt des Schottky-Typs umfasst, so dass die komplette Struktur an Masse gelegt werden kann.

**Claims**

**1.** An optical carrier modulator by surface plasmons based on semi-conductor materials, comprising:

- a set of semi-conducting layers comprising a guiding structure (21, 22, 23) for an incident optical wave introduced into said guiding structure, said guiding structure providing asymmetric containment of said optical wave;
- a metal layer, referred to as upper layer, forming a contact (26) of the Schottky type with said set of semi-conducting layers and being designed to notably receive said optical wave guided by said set of semi-conducting layers so as to allow the generation of a plasmon surface wave at the metal/semi-conductor interface; and means designed to modulate the optical index of said set of semi-conducting layers at said electrical contact of the Schottky type so as to create a modulation of the optical wave reflected at said interface.

**2.** The optical carrier modulator by surface plasmons according to claim 1, **characterised in that** said Schottky type contact comprises at least one metal layer and one semi-conducting layer, with said means designed to modulate the optical index of said semi-conducting layer being derived from said Schottky type contact.

**3.** The optical carrier modulator by surface plasmons according to claim 1 or 2, **characterised in that** said guiding structure comprises a first structure for optical containment, referred to as lower structure, a core in which an optical wave can propagate, and a second structure for optical containment, referred to as upper structure, with said second structure for optical containment being a graded-index structure and being contiguous with the metal/semi-conductor interface, allowing the incident optical wave to be directed to the metal/semi-conductor interface.

**4.** The optical carrier modulator by surface plasmons according to claim 3, **characterised in that** said second containment structure comprises a stack of semi-conducting layers allowing the graded-index to be realised.

**5.** The optical carrier modulator by surface plasmons according to claim 4, **characterised in that** it comprises a set of layers ($22_1$,...,$22_i$,...,$22_n$) providing the upper asymmetric graded-index containment function.

**6.** The optical carrier modulator by surface plasmons according to claim 1 or 2, **characterised in that** it comprises a prism (Pr) made from a material with an optical index higher than that of the centre of the guiding structure.

**7.** The optical carrier modulator by surface plasmons according to any one of claims 1 to 6, **characterised in that** the set of semi-conducting layers comprising a guiding structure for an incident optical wave comprises alternating InP-based layers and quaternary material-based layers of the GaInAsP type.

**8.** The optical carrier modulator by surface plasmons according to any one of claims 1 to 7, **characterised in that** said Schottky type contact between said metal layer and said set of semi-conducting layers is designed to allow the variation of optical index at the frequency of a modulation signal that can be applied at said contact.

**9.** The optical carrier modulator by surface plasmons according to any one of claims 1 to 8, **characterised in that** it comprises an ohmic contact on the rear face, corresponding to a face opposite that which comprises said Schottky type contact so that the complete structure can be grounded.

FIG.1

FIG.2

FIG.3a

FIG.3b

261 ⎫
262 ⎬ 26
263 ⎭

27

28

$22_1, ..., 22_i, ..., 22_n$

21

23

24

251 ⎫
     ⎬ 25
252 ⎭

FIG.4

26

SP

$O_i$

$O_m$

Pr

25

FIG.5